# EUROPEAN PATENT APPLICATION

(11) **EP 3 064 317 A1**
(43) Date of publication of application: **07.09.2016**
(21) Application number: 15305317.8
(22) Date of filing: 02.03.2015
(51) Int. Cl.: B24B 33/02, B24B 33/10, B23Q 7/08

(54) **HONING MACHINE FOR BEARING RINGS AND METHOD FOR FEEDING SUCH A MACHINE WITH BEARING RINGS**

(71) Applicant: Aktiebolaget SKF, 415 50 Göteborg (SE)
(72) Inventor: Lansigu, Denis, 37110 Villedomer (FR); Corset, Eric, 37360 Rouziers de Touraine (FR); Kaelin, Alexandre, 41000 Blois (FR); Proust, Gilles, 37360 Neuille-Pont-Pierre (FR); Bellanger, Renaud, 37390 Notre Dame D'Oe (FR)
(74) Representative: Lavoix

(57) **Abstract**

This honing (2) machine for bearing rings (100, 102) includes a frame (12), a honing tool, a honing station (14) for holding a bearing ring (100) in position with respect to the honing tool and a transfer mechanism (20) for feeding the honing station with bearing rings, one after the other. The transfer mechanism includes a first transfer box (202), adapted to accommodate a bearing ring (102) and movable in translation, in a to-and-fro movement with respect to the frame (12), along a first axis (Y202), and a second transfer box (204), adapted to accommodate a bearing ring and movable in translation, in a to-and-fro movement with respect to the frame, along a second axis (Y204) parallel to the first axis. The transfer mechanism (20) also includes first and second driving means for driving the first and second transfer boxes in translation along the first and second axes (Y202, Y204). The second transfer box (204) is located under and adjacent the first transfer box (202), above the honing station (14). The second transfer box (204) has a top inlet opening (204A) which is vertically aligned with a bottom outlet opening (202B) of the first transfer box (202).

## Description

### TECHNICAL FIELD OF THE INVENTION

This invention relates to a honing machine which can be used for a honing process on bearing rings. This invention also relates to a method for feeding a honing machine with bearing rings.

### BACKGROUND OF THE INVENTION

In the field of bearings manufacturing, it is known to use a honing machine provided with a honing tool or "honing stone" which is brought into contact with an inner radial track of a bearing ring, in order to improve its finish. During a honing process, each bearing ring is held in a honing station and driven in rotation with respect to the honing tool which remains stationary. Such a honing station must be fed with bearing rings, one after the other, and a complex transfer mechanism is generally used, this transfer mechanism being tailored to the dimensions of the rings to be processed. Such a transfer mechanism is costly and difficult to set up.

Moreover, a bearing manufacturer generally offers a range of bearings whose inner and outer rings have different dimensions. Thus, bearing rings with different dimensions have to be successively processed on a honing machine. When it is needed to switch the honing machine from a configuration where it handles a first type of bearing rings to another configuration where it handles a second type of rings, the existing transfer mechanism has to be dissembled from the machine and a new transfer mechanism must be mounted on the machine. Because of the complexity of the known transfer mechanisms, this is time consuming and requires a highly qualified manpower.

### SUMMARY OF THE INVENTION

This invention aims at solving these problems with a new honing machine where feeding of the honing station with bearing rings is obtained via a reliable mechanism, which is easy to install on the honing machine.

To this end, the invention concerns a honing machine for bearing rings, this machine including a frame, a honing tool, a honing station for holding a bearing ring in position with respect to the honing tool and a transfer mechanism for feeding the honing station with bearing rings, one after the other. According to the invention, the transfer mechanism includes:
- a first transfer box, adapted to accommodate a bearing ring and movable in translation, in a to-and-fro movement with respect to the frame, along a first axis
- a second transfer box, adapted to accommodate a bearing ring and movable in translation, in a to-and-fro movement with respect to the frame, along a second axis parallel to the first axis
- first driving means for driving the first transfer box in translation along the first axis and
- second driving means for driving the second transfer box in translation along the second axis.
Moreover, the second transfer box is located under and adjacent to the first transfer box, above the honing station, and the second transfer box has a top inlet opening which is vertically aligned with a bottom outlet opening of the first transfer box.

Thanks to the invention, the first and second transfer boxes allow feeding of the honing station by gravity. The respective movements of the first and second transfer boxes along the first and second axes allow control of the downward movements of the bearing rings towards the honing station.

According to further aspects of the invention, which are advantageous but not compulsory, the honing machine might incorporate one or several of the following features taken in any admissible configuration:
- The first transfer box includes a pusher for pushing a bearing ring accommodated in the second transfer box, along the second axis.
- The second transfer box includes a platform for supporting a bearing ring accommodated in the second transfer box, said platform being adjacent a bottom outlet opening of the second transfer box.
- An end of the platform, which delimits the bottom outlet opening of the second transfer box, is designed to push a bearing ring out of the honing station, upon movement of the second transfer box along the second axis.
- The second transfer box is movable, along the second axis, between a first position, where a bottom outlet opening of the second transfer box is laterally offset from the honing station, and a second position, where this bottom outlet opening is vertically aligned with the honing station.
- Each transfer box defines an inlet opening and a bottom outlet opening.
- The first transfer box includes two side walls and two spacers mounted between the side walls.
- The pusher is formed by one of the two spacers of the first transfer box.
- The second transfer box includes two side walls and two spacers mounted between the side walls.
- The platform is formed by one of the two spacers of the second transfer box.
- The side walls are metallic and the spacers are made of a synthetic material.
- At least one side wall is provided with an inspection window.
- The honing machine includes a control unit for piloting the first and second driving means so that the first and second transfer boxes move according to a predetermined sequence.
- The honing machine includes a workpiece holder with a concave surface equipped with pads for supporting a bearing ring and a damper movable between a first active configuration, where it protrudes on a path of a bearing ring moving towards the workpiece holder in the honing station, and a second passive configuration, where it is out of reach of the bearing ring in the honing station.

The invention also relates to a method for feeding a honing station with a first bearing ring and for ejecting a second bearing ring from this honing station, this honing station belonging to a honing machine as mentioned here-above. According to the invention, this method includes at least the following steps consisting in:
a) making the first bearing ring enter the inside volume of the first transfer box
b) letting the first bearing ring go, by gravity, from the inside volume of the first transfer box into the inside volume of the second transfer box
c) temporary holding the bearing ring within the inside volume of the second transfer box
d) moving the second transfer box along the second axis and using this movement of the second transfer box to eject the second bearing ring from the honing station
e) moving the first transfer box with respect to the second transfer box, along the first axis, and using this movement of the first transfer box to push the first bearing ring, within the inside volume of the second transfer box, towards a bottom outlet opening of the second transfer box
f) moving the second transfer box, along the second axis, to a position where the bottom outlet opening of the second transfer box is vertically aligned with the honing station and
g) letting the first bearing ring go, by gravity, from the inside volume of the second transfer box into the honing station.

### BRIEF DESCRIPTION OF THE DRAWINGS

The invention will be better understood on the basis of the following description which is given in correspondence with the annexed figures and as an illustrative example, without restricting the object of the invention. In the annexed figures:
- figure 1 is a partial perspective view of a honing machine according to the invention in a loading configuration,
- figure 2 is a perspective view similar to figure 1, when the honing machine is in a honing configuration,
- figure 3 is a perspective view of a first transfer box, which belongs to a transfer mechanism of the honing machine of figure 1,
- figure 4 is a perspective view of a second transfer box, which belongs to the same transfer mechanism,
- figure 5 is a partial front view of the machine of figures 1 and 2, where some parts are omitted, for the sake of clarity,
- figure 6 is a front view similar to figure 5, at a smaller scale and where some side panels have been removed in order to show the bearing rings in the transfer mechanism,
- figure 7 is a front view similar to figure 6 where, for the sake of clarity only two bearing rings are represented in the machine, which is in the configuration of figures 5 and 6,
- figures 8 to 14 are front views similar to figure 6 when the transfer mechanism of the honing machine is in successive configurations,
- figure 15 is an enlarged detailed view of a workpiece holder of the machine of figures 1 to 14, when this workpiece holder is in the configuration of figure 13,
- figure 16 is a perspective view of the workpiece holder in the configuration of figure 15,
- figure 17 is an enlarged view, similar to figure 15 when the workpiece holder is in the configuration of figure 14,
- figure 18 is a perspective view of the workpiece holder in the configuration of figure 17, in a direction close to the one of figure 16, and
- figure 19 is a perspective view of the workpiece holder, in the configuration of figures 17 and 18, in another direction.

### DETAILED DESCRIPTION OF SOME EMBODIMENTS

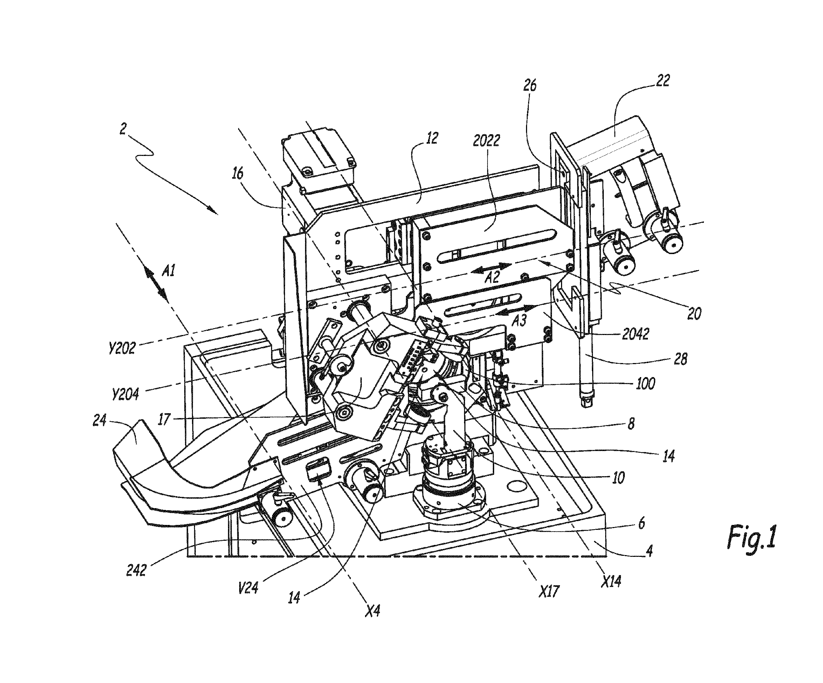

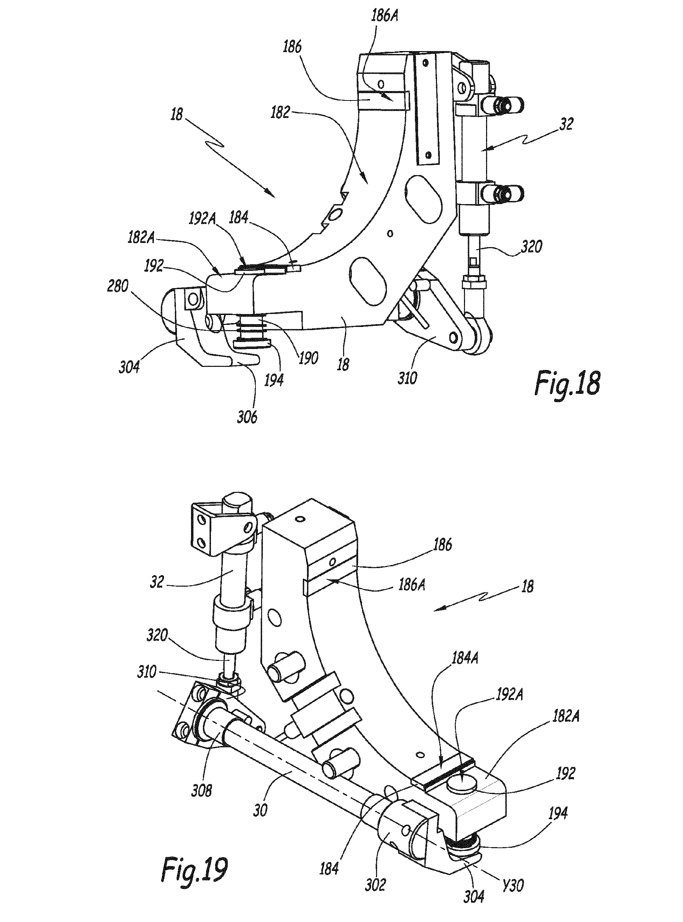

The honing machine 2 represented on figures 1 to 19 includes a base frame 4 which supports a fixed pole 6. A honing stone 8 is supported by an arm 10 which extends upwardly from fixed bracket 6.

Honing machine 2 also includes a movable frame 12 slidable, with respect to base frame 4, along a fixed longitudinal axis X4, in two opposite directions, as shown by double arrow A1. A non-represented actuator, such as an electric motor or a pneumatic or hydraulic cylinder, drives movable frame 12 in translation along axis X4.

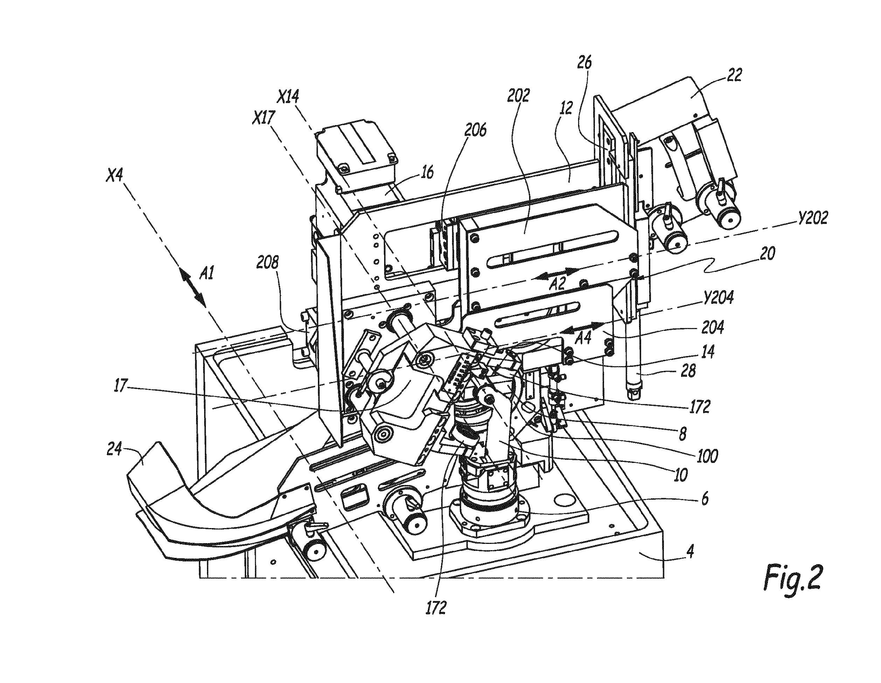

Movable frame 12 supports a honing station 14 where a bearing ring 100 is held in position for interaction with the honing stone 8. More precisely, movable frame 12 supports a rotary actuator, in the form of an electric motor 16, which is adapted to drive bearing ring 100 present in holding station 14 around a rotation axis X14 which is fixed with respect to frame 12 and parallel to axis X4. Movable frame 12 supports a holding mechanism 17 provided with two rollers 172 adapted to come into contact with a lateral surface of bearing ring and to push this ring towards electric motor 16, in order to make a friction type connection between bearing ring 100 and a rotating member 162 driven by motor 16 in rotation around axis X14. Actually, holding mechanism 17 is movable with respect to frame 12, in translation along an axis X17 parallel to axes X4 and X14, between a loading configuration of honing machine 2 represented on figure 1 and a honing configuration represented on figure 2. In the configuration of figure 1, rollers 172 do not contact bearing ring 100 whereas, in the configuration of figure 2, rollers 172 push bearing ring 100 against rotating member 162.

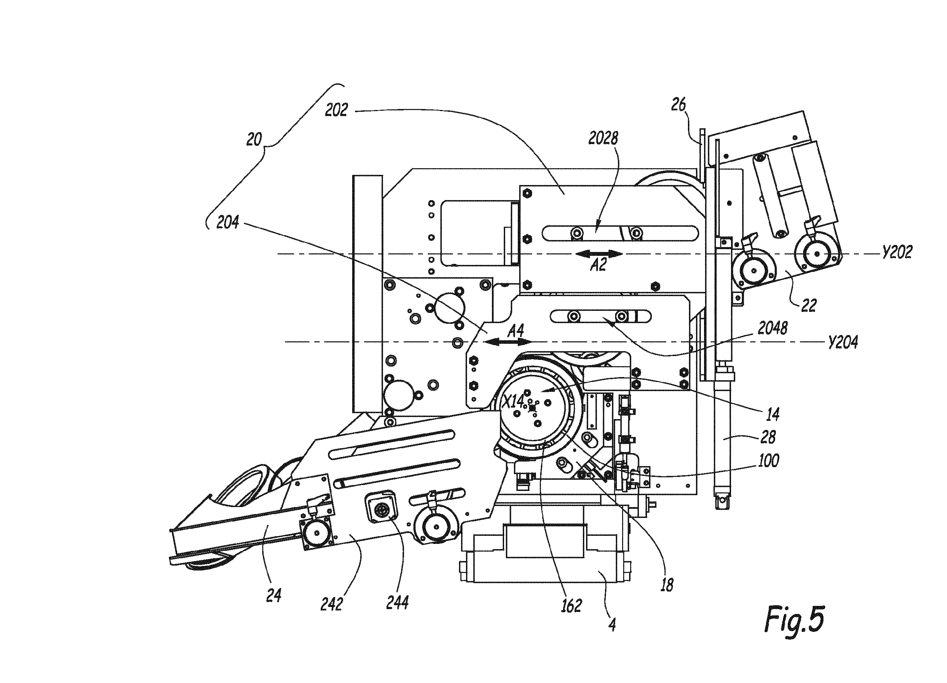

In the following description, unless otherwise specified, one considers honing machine 2 in its loading configuration. For the sake of clarity, items 4 to 10 and 17 are omitted on figures 5 to 14.

Honing station 14 includes, amongst others, a workpiece holder 18 which has a concave surface 182, with a section perpendicular to axis X14 in the form of an arc of a circle centered on axis X14. This workpiece holder is selected in order to match the outer dimensions of bearing rings to be processed by honing machine 2. Thus, workpiece holder is generally changed when a new type of bearing rings is to be processed in honing machine 2.

Honing machine 2 also includes a transfer mechanism 20 which is used to successively feed honing station 14 with bearing rings stored in an inlet chute 22.

Transfer mechanism 20 includes a first transfer box 202 and a second transfer box 204 which is located immediately below the first transfer box.

In the present description, the words "below", "above", "inferior" or "superior" relate to a working configuration of honing machine 2. "Above" or "superior" relates a surface or a part which is oriented towards the top of machine 2 in such a configuration, whereas "below" or "inferior" relates to a surface or a part which is oriented to the bottom of this machine.

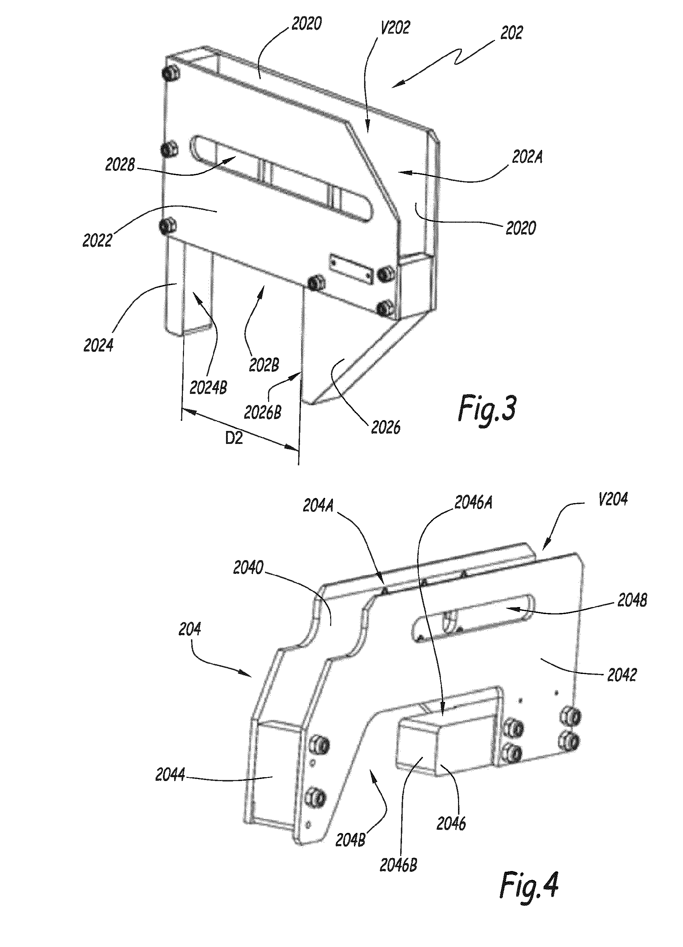

First transfer box 202 is visible alone on figure 3 and includes a first metallic side wall 2020 and a second metallic side wall 2022. Two spacers 2024 and 2026 made of a synthetic material are interposed between side walls 2020 and 2022, so that an inside volume V202 of first transfer box 202 is defined between side walls 2020 and 2022. An inspection window 2028 is provided on side wall 2022 and allows checking the content of volume V202 through side wall 2022.

Spacer 2024 extends on the whole height of side walls 2020 and 2022 and protrudes downwardly with respect to these two walls. Spacer 2026 extends between lower parts of side walls 2020 and 2022, so that an inlet opening 202A is defined on the lateral side of box 202 visible on figure 2. This inlet opening 202A allows introduction of a bearing ring within volume V202. Moreover, an outlet bottom opening 202B is defined between the lower edges of side walls 2020 and 2022 and between spacers 2024 and 2026.

2026A denotes the upper surface of spacer 2026. This upper surface 2026A is inclined towards outlet opening 202B. In other words, this surface lowers in the direction of outlet opening 202B.

2024B and 2026B respectively denote the vertical surfaces of spacers 2024 and 2026 which face each other. In the direction of axis Y202, outlet opening 202B is defined between surfaces 2024B and 2026B. D2 denotes the distance measured between surfaces 2024B and 2026B along axis Y202.

Second transfer box 204 also includes two metallic side walls 2040 and 2042 and two synthetic spacers 2044 and 2046. An inspection window 2048 is provided in side wall 2042 and allows inspection of the inside volume V204 of second transfer box 204. An inlet opening 204A of second transfer box 204 is defined between the top edges of side walls 2040 and 2042. An outlet opening 204B of second transfer box 204 is defined between spacers 2044 and 2046, below the respective central portions of the lower edges of side walls 2040 and 2042.

2046A denotes the upper surface of spacer 2046. This surface is horizontal.

2046B denotes an end face of spacer 2046 oriented towards spacer 2044. Outlet opening 204B is defined, along axis Y204, between spacer 2044 and end face 2046B.

In working configurations of transfer mechanism 20, inlet opening 204A is vertically aligned with outlet opening 202B, so that a bearing ring can go from volume V202 into inside volume V204 by gravity.

Transfer mechanism 20 also includes a first pneumatic cylinder 206 mounted on frame 12 and adapted to drive first transfer box 202 in translation along an axis Y202 which is horizontal and perpendicular to axis X4. Double arrow A2 represents the to-and-fro movements of first transfer box 202 in the direction of axis Y202. Cylinder 206 is a rodless cylinder whose output member is connected to first transfer box 202.

A second pneumatic cylinder 208 is mounted on movable frame 12 and its output member is connected to second transfer box 204 and drives this box in translation along a second axis Y204 which is parallel to axis Y202. Double arrow A4 shows the to-and-fro movements of second transfer box 204 along axis Y204.

Honing machine 2 also includes an inlet chute 22 and an outlet chute 24. In machine 2, bearing rings go from inlet chute 22 to outlet chute 24 via transfer mechanism 20 and honing station 14.

Outlet chute 24 is provided with a side wall 242 and an inductive sensor 244 which allows detecting the presence of a bearing ring in an inside volume V24 of chute 24, when the ring lies or rolls on a lower surface 246 of outlet chute 24.

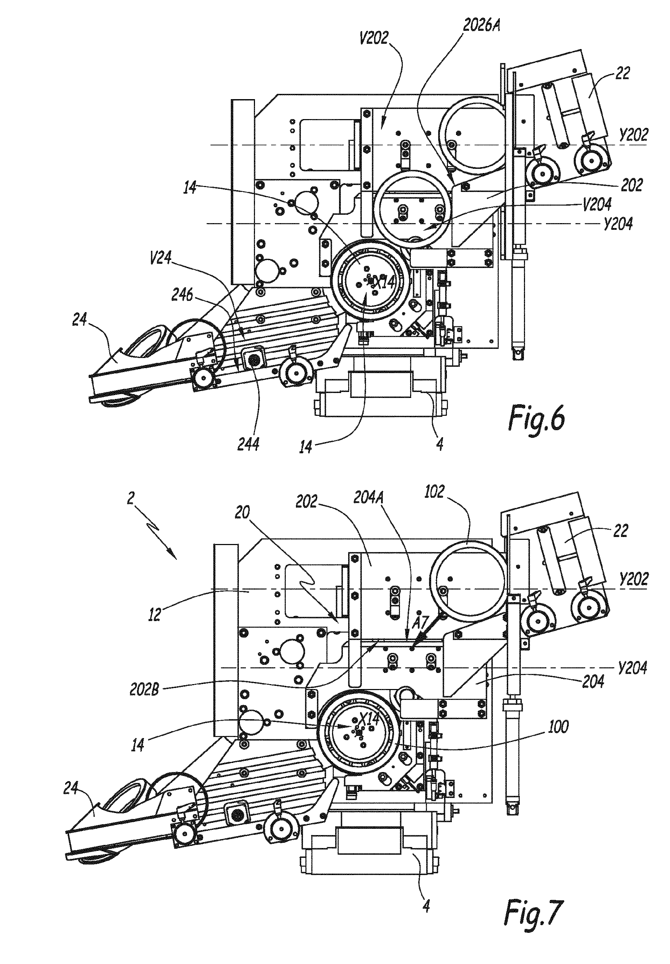

For the sake of clarity, side walls 2022, 2042 and 242 are omitted on figures 6 to 14, in order to show inside volumes V202, V204 and V24 and their content.

An inlet gate 26 is arranged between inlet chute 22 and transfer mechanism 20 and this inlet gate is controlled by a pneumatic cylinder 28.

In this example, cylinders 206, 208 and 28 respectively form actuators for items 202, 204 and 26. Alternatively, other types of actuators can be used, for instance hydraulic cylinders, mechanical jacks or electric motors.

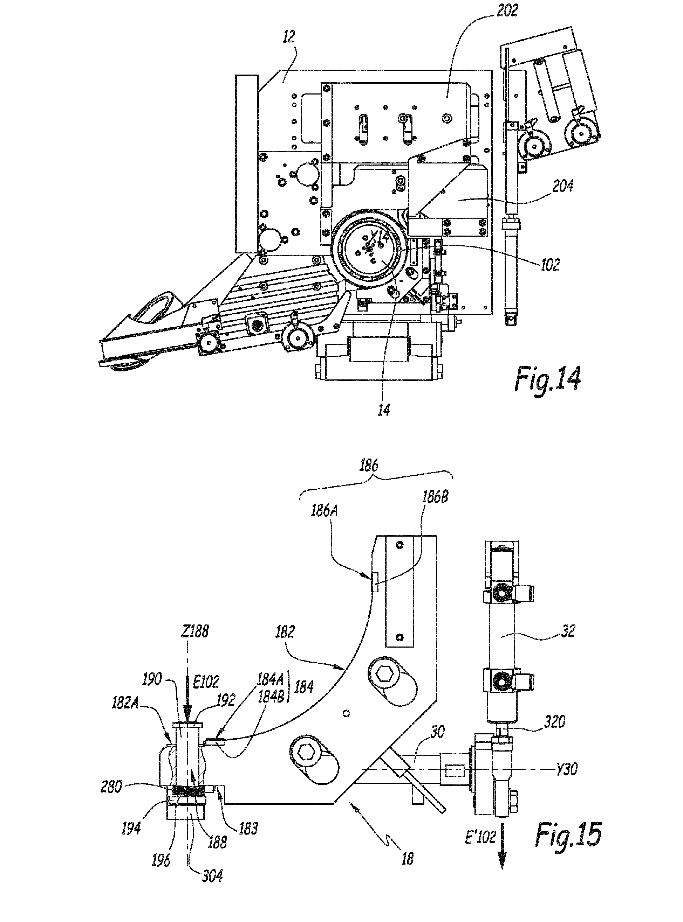

As shown on figures 15 to 19, workpiece holder 18 is equipped with two pads 184 and 186 whose outer or exposed surfaces, respectively 184A and 196A, slightly protrude with respect to concave surface 182, by a few tenth of millimeters, so as to make sure that each bearing ring will touch only the pads and thereby be accurately positioned. Pad 184 is located in the lower part of honing station 14, below bearing ring 100 present in this station. Pad 184 is substantially aligned, along a vertical direction, with axis X14. Pad 186 is located on a side of honing station 14, actually on the same side as inlet chute 22, roughly at the same height as axis X14. The shape of workpiece holder 18, in particular the radius of curvature of concave surface 182 and the location of pads 184 and 186 depend on the geometry of the bearing rings to be processed in honing machine 2.

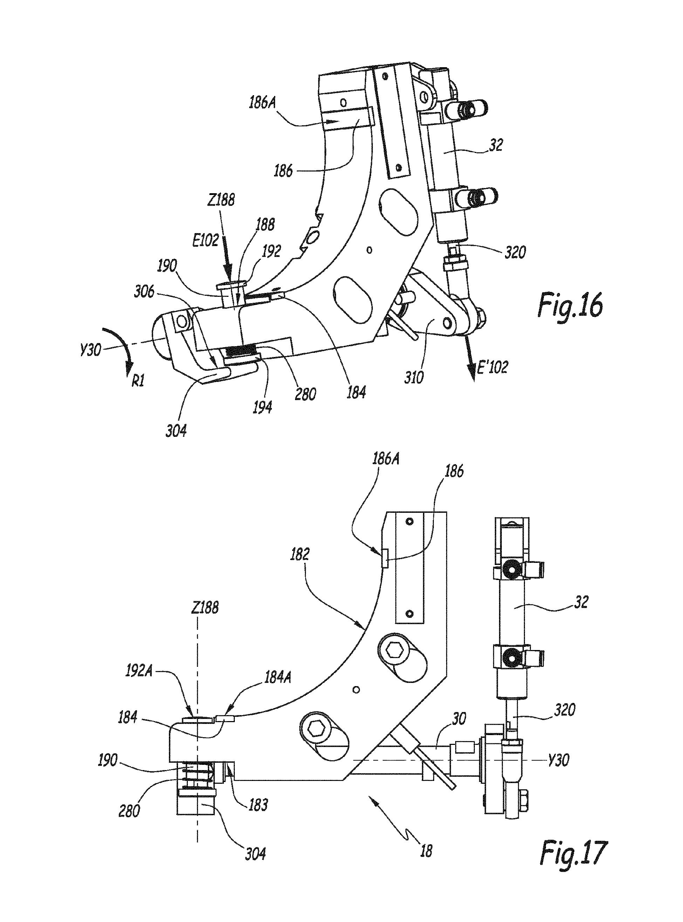

The exposed surface 184A or 186A of each pad 184 or 186 is formed of a layer of polycrystalline diamond or "PCD", which presents a high mechanical stiffness. This high stiffness layer has a thickness between 1 and 500 µm and is applied on an armature 184B or 186B made for instance of carbide, with a thickness between 0,1 and 10 mm, preferably equal to about 0,2 mm. Alternatively, armature 184B or 186B and the high stiffness layer can be made in other materials with suitable mechanical properties to resist wear, shocks and lower the variation of dimensions with temperature and time.. On figures 15 and 17, the thickness of the high stiffness layers forming surfaces 184A and 186A is exaggerated, in order to show these layers more easily.

A through hole 188 is provided on workpiece holder 18 and extends vertically and downwardly from a stepped portion 182A of concave surface 182. Through hole 188 is visible on figure 15 via a local cutaway of workpiece holder 18, which is metallic.

Z188 denotes the central axis of through hole 188. A metallic pin 190 is slidably mounted within through hole 188 and movable along axis Z188 between a first position, represented on figures 15 and 16, and a second position, represented on figures 17 to 19. Pin 190 has an upper head 192 with an upper surface 192A adapted to be in contact with a lower portion of the outer radial surface of bearing ring 100 present in honing station 14, as explained here-under. Pin 190 also has a lower sole 194 which defines a peripheral shoulder 196 around the main portion of pin 190. A coil spring 280 is mounted around pin 190, between shoulder 196 and a lower surface 183 of workpiece holder 18.

As shown on figures 15 and 16, when pin 190 is in its first position, its head 192 protrudes upwardly with respect to surface 184A of pad 184. Thus, head 192 of pin 190 is on the path of a bearing ring falling towards workpiece holder 18. As shown on figures 17 to 19, when pin 190 is in its second position, upper surface 192A of head 192 does not protrude above surface 184A. In this position, surface 192A is slightly below surface 184A, so that a bearing ring lying on workpiece holder 18 does not contact pin 190. In other words, in this second position, pin 190 is out of reach of a ring present in honing station 14.

A shaft 30 is mounted on movable frame 12 next to workpiece holder 18 and its longitudinal axis Y30 is parallel to axes Y202 and Y204. Actually, shaft 30 is rotatably supported by movable frame 12, so that it can rotate around axis Y30 between a first position, represented on figures 15 and 16, and a second position, represented on figures 17 to 19.

A first end 302 of shaft 30 is equipped with a paddle 304 which extends radially with respect to axis Y30, so that it is located directly below sole 194 in the configuration of figures 15 and 16. More precisely, in this configuration, sole 194 lies against an upper surface 306 of paddle 304.

The second end 308 of shaft 30, which is opposite to first end 302, is connected to a rocker arm 310. The end of rocker arm 310 opposite to shaft 30 is connected to an output rod 320 of a gas cylinder 32. Thus, gas cylinder 32 forms an actuator which allows pivoting shaft 30, in rotation around axis Y30, between the position of figures 15 and 16, on the one hand, and the position of figures 17 to 19, on the other hand. Gas cylinder 32 can also be used to dampen a rotation movement of shaft 30 around axis Y30, in the direction of arrow R1 on figure 16, as explained here-below.

A non-represented pneumatic control unit is connected to cylinders 206, 208, 28 and 32 and pilots these actuators, according to a predetermined sequence, which is explained here-below.

Feeding of honing station 14 is now explained in connection to figures 5 to 19.

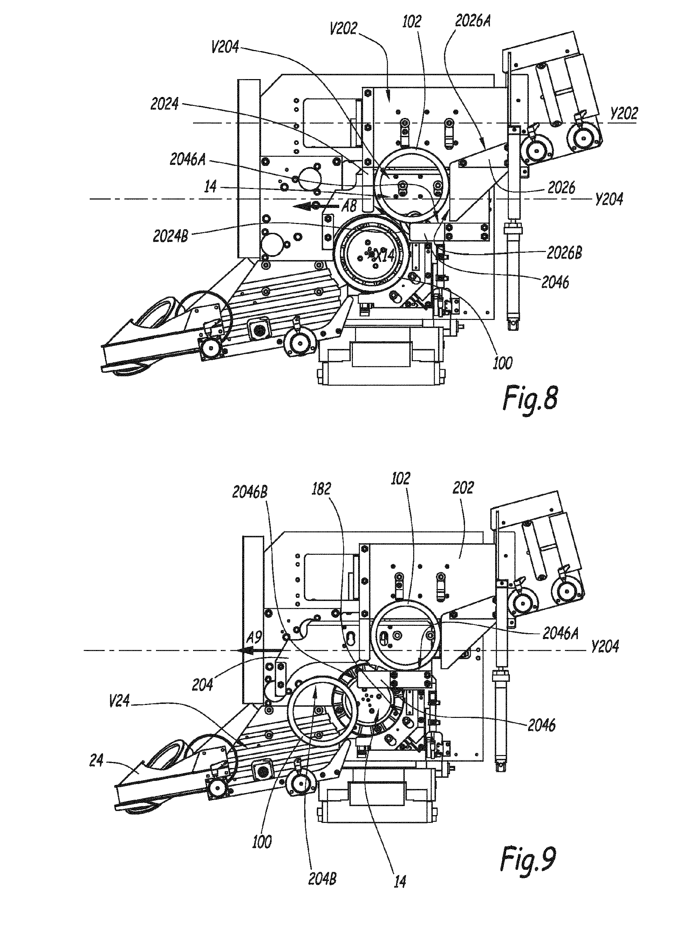

On these figures, a bearing ring present in honing station 14 is referenced 100, whereas a bearing ring to be fed to honing station 14 is referenced 102. Figure 6 shows two bearing rings 102 in transfer mechanism 20 but, for the sake of clarity, only one bearing ring 102 is represented on figures 7 to 14. The configuration of honing machine 2 is the same on figures 6 and 7. In this configuration, bearing ring 100 is present in honing station 14 and centered on axis X14, in front of rotary member 162. Inlet gate 26 has been opened by cylinder 28 and bearing ring 102 enters inside volume V202 of first transfer box 202 via inlet opening 202A. In this configuration, bearing ring 102 rolls on upper surface 2026A of spacer 2026 and falls within inside volume V204 of second transfer box 204 via outlet opening 202B of box 202 and inlet opening 204A of box 204. In other words, and as shown by arrow A7 on figure 7 and by the comparison of figures 7 and 8, bearing ring 102 goes, by gravity, from inside volume V202 into inside volume V204.

Thus, inside volume V202 of first transfer box 202 accommodates bearing ring 102 until it falls down into inside volume V204 of second transfer box 204. In the configuration of figure 8, and actually also in the configuration of figures 9 to 12, volume V204 accommodates most of bearing ring 102, but a top part of the ring remains in volume V202.

In the configuration of figure 8, bearing ring 102 is blocked within volume V204, and actually protrudes upwardly into volume V202 since ring 102 lies on the upper surface 2046A of spacer 2046. Thus, space 2046 works as a platform for supporting bearing ring 102 within volume V204. Moreover, ring 102 is located, along axis Y202, between spacers 2024 and 2026. More precisely, transfer box 202 is designed so that distance D2 is slightly larger than the outside diameter of ring 102. Thus, in the configuration of figure 8, ring 102 is guided between vertical surfaces 2024B and 2026B. In this configuration, bearing ring 102 does not interfere with bearing ring 100 because the opening defined between spacers 2024 and 2046 is not large enough for ring 102 to move downwardly by gravity.

From the configuration of figure 8, second transfer box 204 is moved along axis Y204 by cylinder 208, in the direction of arrows A8 and A9 on figures 8 and 9, so that it reaches the position of figure 9. In this position of second transfer box 204, its bottom outlet opening 204B is laterally offset from honing station 14.

Due to the movement of second transfer box 204 between the configuration of figure 8 and the configuration of figure 9, bearing ring 100 is ejected from honing station 14 by the end face 2046B of spacer 2046. Then, ring 200 falls within the inside volume V24 of outlet chute 24. During the movement of second transfer box 204 in the direction of arrows A8 and A9, bearing ring 102 rolls on upper surface 2046A of platform or spacer 2046.

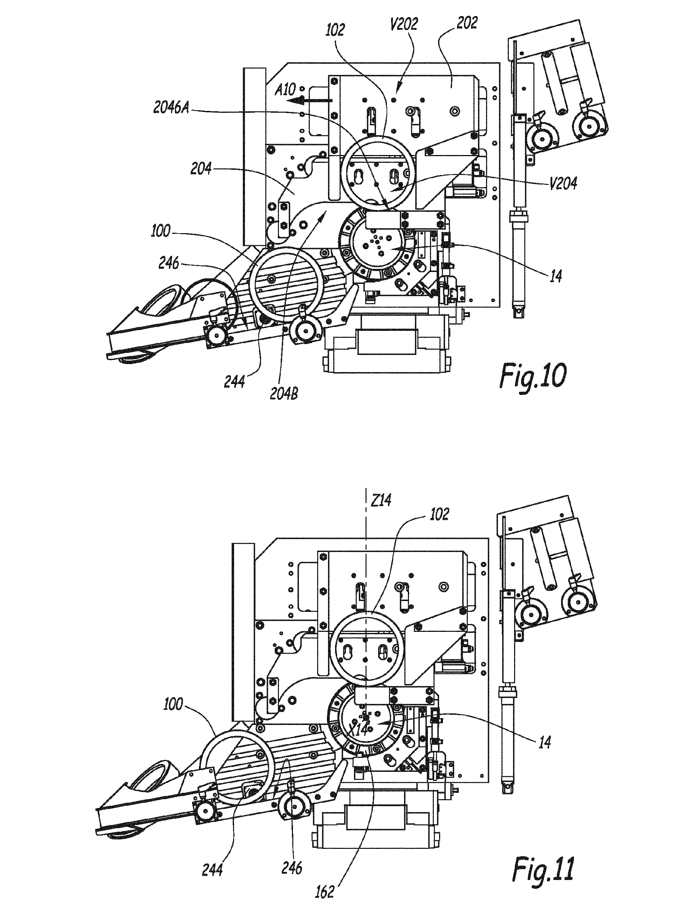

Cylinder 206 is piloted in a next step in order to move first transfer box 202 along axis Y202 in the same direction as second transfer box 204 has been moved previously, as shown by arrow A10 on figure 10. Because of the translation movement of first transfer box 202, spacer 2026 works as a pusher for pushing bearing ring 102 in the same direction, towards spacer 2044, within inside volume V204 and along axis Y204. On this occasion, bearing ring 102 rolls on surface 2046A. This movement of first transfer box 202 goes on up to a point where outlet opening 202B is vertically aligned with honing station 14, along a vertical axis Z14 which crosses axis X14, as shown on figures 10 and 11. This movement of first transfer box 202 results in moving bearing ring 102 towards bottom outlet opening 204B.

The platform formed by spacer 2046 temporary holds bearing ring 102 within inside volume V204, from the configuration of figure 8 to the configuration of figure 11.

As shown on figures 10 and 11, bearing ring 100 rolls on surface 246 within chute 24 and passes in front of inductive sensor 244, so that the ejection of bearing ring 100 from rolling station 14 is automatically detected.

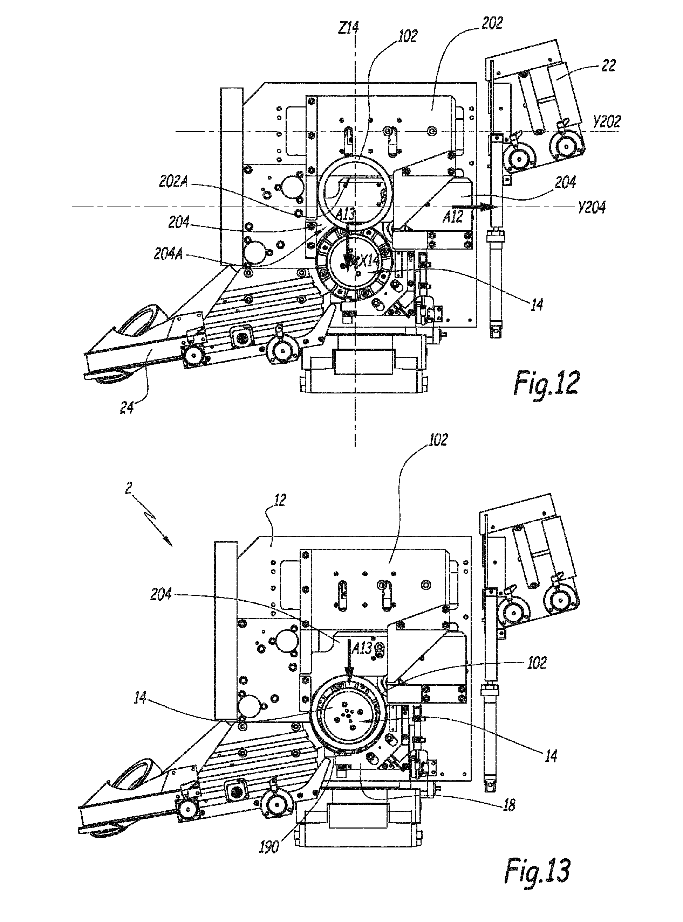

Once this detection has occurred, it is sure that no bearing ring remains in honing station 14, so that this honing station can be loaded again with bearing ring 102. To this end, second transfer box 204 is moved along axis Y204 in the opposite direction, as shown by arrow A12 on figure 2, that is in a direction opposite to the movement of first transfer box 202 in the previous step. This brings transfer mechanism 20 in a configuration where outlet openings 202A and 204A of first and second transfer boxes 202 and 204 are vertically aligned, along vertical axis Z14, with honing station 14. This is the configuration represented on figure 12.

From this configuration and because of gravity, ring 102 falls into honing station 14, as shown by arrow A13 on figures 12 and 13. In other words, bearing ring 102 follows a vertical downward path or trajectory, from volume V204 to honing station 14, this path being shown by arrow A13 on figures 12 and 13.

The downward movement of ring 10 is dampened by pin 190, which protrudes upwardly from pad 184 on the downward path of bearing ring 102, since workpiece holder 18 is in the configuration of figures 15 and 16. When bearing ring 102 reaches head 192 of pin 190, it exerts a downward effort E102, as represented on figures 15 and 16, which is transmitted by pin 190 to paddle 304 and tends to rotate shaft 30 around axis Y30, in the direction of rotation arrow R1. This rotation movement of shaft 30 around its longitudinal axis is transmitted by rocker arm 310 to rod 320 of gas cylinder 32. In other words, effort E102 is transmitted as a pulling effort E'102 on rod 32, this pulling effort being dampened or slowed by the gas pressure within cylinder 32. Thus, shaft 30 and gas cylinder 32 work as braking means for pin 190, when it goes from its position of figures 15 and 16 to a lower position.

Once this dampening or braking effect of the downward movement of ring 102 has been obtained with the damper formed of pin 190, shaft 30 and cylinder 32, cylinder 32 is actuated to push rod 320 outwardly, so that rocker arm 310 and shaft 30 are brought into the configuration of figures 16 to 19 where paddle 304 is offset from pin 190. In other words, shaft 30 is brought by gas cylinder 32 and rocket arm 310 from a first angular position with respect to axis Y30 to a second angular position. In the first angular position of shaft 30, paddle 304 is in contact with sole 194, so that paddle 304 interacts with the downward movement of pin 190 going from its first position to its second position. More precisely, when shaft 30 is in its first angular position, paddle 304 lies on the downward vertical path of sole 194 when pin 190 moves from its first position to its second position. Because of the biasing effort of spring 280, sole 194 is in contact with paddle 304 as long as shaft 30 remains in its first angular position. In the second angular position of shaft 30, paddle 304 is out of reach of sole 194, so that shaft 30 does not interact with pin 190 which is only subjected to its weight and to the action of spring 280. Thus, pin 190 automatically reaches its second position where surface 192A is below surface 184A. Spring 280 pushes sole 194 away from surface 183, so that head 192 comes into contact with surface portion 182A, to the point that head 192 does not protrude upwardly with respect to surface 184A of pad 184, as explained here-above.

Then ring 102 reaches the configuration of figure 14 where it is centered on axis X14 within honing station 14. In this configuration, centering of ring 102 with respect to axis X14 is obtained via pads 184 and 186 which are precisely positioned with respect to frame 12 and can withstand a large number of operations because of their structural hardness.

In other words, thanks to the use of pin 190, shaft 30 and gas cylinder 32, it is possible to use high resistance pads 184 and 186, without risk of breaking pads 184 or 186 or caulking the outer radial surface of ring 102. In the configuration of figure 14, ring 102 is ready for being pushed by holding mechanism 17 against rotating member 162, so that it can be driven in rotation around axis X14 by electric motor 16 once movable frame 12 has been moved along axis X4 in order to align, along axis X4, the inner radial surface of ring 102, now present in honing station 14, with honing stone 8.

At a later stage, which corresponds to the configuration of figure 11, that is when a bearing ring has just been ejected from honing station 14, gas cylinder 32 actuates rocker arm 310 to bring shaft 30 back to its first position, which brings pin 190 back to its position of figures 12 to 16.

Throughout the process described here-above, inspection windows 2028 and 2048 allow checking the position of bearing ring 102 in transfer mechanism 20.

## Claims

1. Honing (2) machine for bearing rings (100, 102), this machine including:
- a frame (12),
- a honing tool (8),
- a honing station (14) for holding a bearing ring (100) in position with respect to the honing tool,
- a transfer mechanism (20) for feeding the honing station with bearing rings, one after the other,
**characterized in that**
• the transfer mechanism includes:
- a first transfer box (202), adapted to accommodate a bearing ring (102) and movable in translation, in a to-and-fro (A2) movement with respect to the frame (12), along a first axis (Y202),
- a second transfer box (204), adapted to accommodate a bearing ring and movable in translation, in a to-and-fro movement (A4) with respect to the frame, along a second axis (Y204) parallel to the first axis,
- first driving means (206) for driving the first transfer box in translation along the first axis and
- second driving means (208) for driving the second transfer box in translation along the second axis
• the second transfer box (204) is located under and adjacent to the first transfer box (202), above the honing station (14),
• the second transfer box has a top inlet opening (204A) which is vertically aligned with a bottom outlet opening (202B) of the first transfer box.

2. A honing machine according to claim 1, **characterized in that** the first transfer box (202) includes a pusher (2026) for pushing a bearing ring (102) accommodated in the second transfer box, along the second axis (Y204).

3. A honing machine according to any preceding claim, **characterized in that** the second transfer (204) box includes a platform (2046) for supporting a bearing ring (102) accommodated in the second transfer box, said platform being adjacent a bottom outlet opening (204B) of the second transfer box.

4. A honing station according to claim 3, **characterized in that** an end (2046B) of the platform (2046), which delimits the bottom outlet opening (204B) of the second transfer box (204), is designed to push a bearing ring (100) out of the honing station (14), upon movement (A8, A9) of the second transfer box along the second axis (Y204).

5. A honing machine according to any preceding claim, **characterized in that** the second transfer box (204) is movable (A12), along the second axis (Y204), between a first position, where a bottom outlet opening (204B) of the second transfer box is laterally offset from the honing station (14), and a second position, where this bottom outlet opening is vertically aligned with the honing station.

6. A honing station according to any preceding claim, **characterized in that** each transfer box (202, 204) defines an inlet opening (202A, 204A) and a bottom outlet opening (202B, 204B).

7. A honing machine according to any preceding claim, **characterized in that** the first transfer box (202) includes two side walls (2020, 2022) and two spacers (2024, 2026) mounted between the side walls.

8. A honing machine according to claims 2 and 7, **characterized in that** the pusher (2026) is formed by one of the two spacers (2024, 2026) of the first transfer box (202).

9. A honing machine according to any preceding claim, **characterized in that** the second transfer box (204) includes two side walls (2040, 2042) and two spacers (2044, 2046) mounted between the side walls.

10. A honing machine according to claims 3 and 9, **characterized in that** the platform (2046) is formed by one of the two spacers (2044, 2046) of the second transfer box (204).

11. A honing machine according to one of claims 7 to 10, **characterized in that** the side walls (2020, 2022, 2040, 2042) are metallic and the spacers (2024, 2026, 2044, 2046) are made of a synthetic material.

12. A honing machine according to one of claims 7 to 11, **characterized in that** at least one side wall (2022, 2042) is provided with an inspection window (2028, 2048).

13. A honing machine according to any preceding claim, **characterized in that** it includes a control unit for piloting the first and second driving means (206, 208) so that the first and second transfer boxes (202, 204) move according to a predetermined sequence (A9, A12, A13).

14. A honing machine according to any preceding claim, **characterized in that** the honing station (14) includes a workpiece holder (18) with a concave surface (182) equipped with:
- pads (184, 186) for supporting a bearing ring (100, 102) and
- a damper (190) movable between a first active configuration, where it protrudes on a path of a bearing ring (102) moving towards the workpiece holder in the honing station, and a second passive configuration, where it is out of reach of the bearing ring in the honing station.

15. Method for feeding a honing station (14) of a honing machine (2) according to any preceding claim with a first bearing ring (102) and for ejecting a second bearing ring (100) from the honing station, **characterized in that** it includes at least the following steps consisting in:
a) making the first bearing ring (102) enter the inside volume (V102) of the first transfer box (202),
b) letting the first bearing ring go, by gravity, from the inside volume of the first transfer box into the inside volume (V204) of the second transfer box (204),
c) temporary holding the bearing ring within the inside volume of the second transfer box,
d) moving (A9) the second transfer box (204) along the second axis (Y204) and using this movement of the second transfer box to eject the second bearing (100) ring from the honing station (14),
e) moving (A10) the first transfer box (202) with respect to the second transfer box (204), along the first axis (Y202), and using this movement of the first transfer box to push the first bearing ring (102), within the inside volume (V204) of the second transfer box, towards a bottom outlet opening (204B) of the second transfer box
f) moving (A12) the second transfer box (204), along the second axis, to a position where the bottom outlet opening of the second transfer box is vertically aligned with the honing station, and
g) letting the first bearing ring (102) go, by gravity, from the inside volume (V204) of the second transfer box into the honing station (14).
